# DEMANDE DE BREVET EUROPEEN

(11) **EP 4 589 537 A1**
(43) Date de publication de la demande: **23.07.2025**
(21) Numéro de dépôt: 24305123.2
(22) Date de dépôt: 19.01.2024
(51) Int. Cl.: G06T 11/00

(54) **PROCÉDÉ DE GÉNÉRATION DE DONNÉES, PROGRAMME D'ORDINATEUR ET DISPOSITIF DE CALCUL ASSOCIÉS**

(71) Demandeur: BULL SAS, 78340 Les Clayes-Sous-Bois (FR)
(72) Inventeur: WINCKLER, Nicolas, 38190 Villard Bonnot (FR); DEVEZE, Louis, 38600 Fontaine (FR); DRUART, Anaïs, 95300 Ennery (FR); MORIN, Guillaume, 38000 Grenoble (FR); PAULETTO, Loïc, 38100 Grenoble (FR)
(74) Mandataire: IPAZ

(57) **Abrégé**

L'invention concerne un procédé de génération de données, le procédé étant mis en oeuvre par ordinateur et comprenant les étapes :
- mise en oeuvre (22) d'un moteur 3D pour produire des métadonnées relatives à une scène de référence générée au moyen dudit moteur 3D, la scène de référence étant représentative d'une situation cible prédéterminée ;
- fourniture (24), en entrée d'un modèle de contrôle couplé à un modèle génératif, d'au moins une partie des métadonnées produites par le moteur 3D ;
- calcul (26), au moyen du modèle génératif, d'au moins une image synthétique représentative de la situation cible, à partir d'une sortie du modèle de contrôle et de données descriptives relatives à la situation cible ; et
- stockage (34), dans un jeu de données, d'au moins une image synthétique calculée.

## Description

### Domaine technique

La présente invention concerne un procédé de génération de données.

L'invention concerne également un programme d'ordinateur et un dispositif mettant en oeuvre un tel procédé.

L'invention s'applique au domaine de l'informatique, et plus précisément de la génération de données pour l'entraînement de modèles d'intelligence artificielle.

### État de la technique

Dans le cadre de l'apprentissage supervisé, les modèles d'intelligence artificielle (tels que les modèles d'apprentissage profond) nécessitent généralement de quantités importantes de données pour parvenir à des performances satisfaisantes à l'issue de leur entraînement.

Par conséquent, il est connu de collecter de grandes quantités de données représentatives de situations que le modèle d'intelligence artificielle est susceptible de rencontrer afin de les fournir audit modèle lors de son apprentissage.

Néanmoins, un tel procédé ne donne pas entière satisfaction.

En effet, les données à acquérir sont généralement difficiles et coûteuses à produire.

En outre, dans certaines applications, les données acquises sont généralement insuffisantes (par leur quantité), voire inadaptées (par leur contenu) au regard de la tâche que le modèle d'intelligence artificielle à entraîner est destiné à accomplir. Ce problème est d'autant plus accentué pour des usages, par exemple de sécurité, où l'on cherche à prédire ou détecter des situations rares par nature.

Par exemple, un modèle de détection visuelle de feux et de fumées utilisé dans un aéroport sera d'autant plus performant si le modèle a été entrainé sur des données avec du feu et de la fumée dans ce même aéroport. Or, des images représentant des incendies dans des aéroports sont rares, dans la mesure où l'on cherche, autant que possible, à empêcher qu'un tel évènement se produise.

Un but de la présente invention est de remédier à au moins un des inconvénients de l'état de la technique.

Un autre but de l'invention est de proposer un procédé d'obtention de données qui soit moins coûteux et qui fournisse des résultats plus pertinents que les procédés connus.

### Exposé de l'invention

À cet effet, l'invention concerne un procédé du type précité, le procédé étant mis en oeuvre par ordinateur et comprenant les étapes :
- mise en oeuvre d'un moteur 3D pour produire des métadonnées relatives à une scène de référence générée au moyen dudit moteur 3D, la scène de référence étant représentative d'une situation cible prédéterminée ;
- fourniture, en entrée d'un modèle de contrôle couplé à un modèle génératif, d'au moins une partie des métadonnées produites par le moteur 3D ;
- calcul, au moyen du modèle génératif, d'au moins une image synthétique représentative de la situation cible, à partir d'une sortie du modèle de contrôle et de données descriptives relatives à la situation cible ; et
- stockage, dans un jeu de données, d'au moins une image synthétique calculée.

En effet, le recours à un moteur 3D autorise un contrôle total de la position et de la composition des objets dans la scène de référence, de sorte qu'une situation cible rare est susceptible d'être modélisée. Ceci résulte du fait qu'un moteur 3D autorise une maîtrise sur une grande variété de paramètres des objets dans la scène de référence, tels que leurs géométries, leurs animations, leurs textures, les jeux de lumières, le contrôle des caméras, les interactions physiques, etc.

Le recours au modèle 3D confère donc une grande flexibilité vis-à-vis des situations rares.

En outre, le moteur 3D ayant une connaissance exacte de la position et de la profondeur de chaque objet dans la scène de référence, des propriétés optiques de la caméra, etc., les métadonnées obtenues en sortie du moteur 3D sont précises et fidèles à la scène de référence. Plus précisément, les métadonnées obtenues en sortie du moteur 3D ne comprennent aucun erreur ou approximation, contrairement à celles qui auraient été obtenues par un autre moyen automatisé, tel qu'un algorithme tiers de traitement d'image opérant sur la base d'une image représentative de la situation cible.

De telles métadonnées comprennent, par exemple, des masques de segmentation sémantique des objets présents dans la scène de référence, des boîtes englobantes, des cartes de profondeurs, des données de pose d'éléments (notamment articulés) présents dans la scène de référence, des classes, ou encore des étiquettes.

Enfin, grâce à la mise en oeuvre du modèle de contrôle, prenant en entrée les métadonnées fournies par le modèle 3D, le fonctionnement du modèle génératif est contraint, de sorte que les images synthétiques calculées par le modèle génératif sont réalistes et fidèles à la situation cible.

Il en résulte que, grâce à l'invention, les images synthétiques calculées sont peu coûteuses, et pertinentes au regard de la situation cible.

De façon avantageuse, le procédé selon l'invention présente une ou plusieurs des caractéristiques suivantes, prises isolément ou selon toute combinaison techniquement possible :
le procédé comprend, en outre, une étape d'évaluation comprenant une détermination, pour chaque image synthétique calculée, d'un score correspondant, chaque image synthétique stockée dans le jeu de données présentant un score appartenant à une plage prédéterminée ;
pour chaque image synthétique, le score correspondant est représentatif d'une qualité de ladite image synthétique et/ou d'une similarité de ladite image synthétique avec au moins une image prédéterminée ;
le procédé comprend, en outre, une association, à chaque image synthétique, d'au moins une partie des métadonnées produites à l'issue de la mise en oeuvre du moteur 3D, de préférence d'au moins une partie des métadonnées fournies en entrée du modèle de contrôle ;
le procédé comprend, en outre, un entraînement d'un modèle de vision par ordinateur sur la base du jeu de données, chaque image synthétique formant une entrée du modèle de vision par ordinateur, les métadonnées associées formant une sortie attendue du modèle de vision par ordinateur pour ladite entrée ;
le procédé comprend, en outre, une étape de réglage, antérieure à l'étape de calcul, comportant un entraînement du modèle génératif sur la base de données additionnelles prédéterminées correspondant à la situation cible, pour modifier le modèle génératif.

Selon un autre aspect de l'invention, il est proposé un programme d'ordinateur comprenant des instructions exécutables qui, lorsqu'elles sont exécutées par ordinateur, mettent en oeuvre les étapes du procédé tel que défini ci-dessus.

Le programme d'ordinateur peut être en tout langage informatique, tel que par exemple en langage machine, en C, C++, JAVA, Python, etc.

Selon un autre aspect de l'invention, il est proposé un dispositif de calcul pour la génération de données, le dispositif de calcul comprenant une unité de traitement configurée pour :
- mettre en oeuvre un moteur 3D pour produire des métadonnées relatives à une scène de référence générée au moyen dudit moteur 3D, la scène de référence étant représentative d'une situation cible prédéterminée ;
- fournir, en entrée d'un modèle de contrôle couplé à un modèle génératif, au moins une partie des métadonnées produites par le moteur 3D ;
- calculer, au moyen du modèle génératif, au moins une image synthétique représentative de la situation cible, à partir d'une sortie du modèle de contrôle et de données descriptives relatives à la situation cible ; et
- stocker, dans un jeu de données, au moins une image synthétique calculée.

Le dispositif selon l'invention peut être tout type d'appareil tel qu'un serveur, un ordinateur, une tablette, un calculateur, un processeur, une puce informatique, programmé pour mettre en oeuvre le procédé selon l'invention, par exemple en exécutant le programme d'ordinateur selon l'invention.

### Brève description des figures

L'invention sera mieux comprise à la lecture de la description qui va suivre, donnée uniquement à titre d'exemple non limitatif et faite en se référant aux dessins annexés sur lesquels :
la figure 1 est une représentation schématique d'un dispositif de calcul selon l'invention ;
la figure 2 est un ordinogramme d'un procédé de génération de données mis en oeuvre par le dispositif de calcul de la figure 1 ;
la figure 3 est un premier exemple de scène de référence modélisée au moyen d'un moteur 3D du dispositif de calcul de la figure 1 ;
la figure 4 est un exemple de données de pose obtenues à partir de la scène de référence de la figure 3, à l'issue d'une étape de production du procédé de la figure 2 ;
la figure 5 est un exemple d'image synthétique obtenue à partir des données de pose de la figure 4 ;
la figure 6 est un deuxième exemple de scène de référence modélisée au moyen du moteur 3D du dispositif de calcul de la figure 1 ;
la figure 7 est un exemple de masque de segmentation obtenu à partir de la scène de référence de la figure 6, à l'issue de l'étape de production du procédé de la figure 2 ; et
la figure 8 est un exemple d'image synthétique obtenue à partir du masque de segmentation de la figure 7.

Il est bien entendu que les modes de réalisation qui seront décrits dans la suite ne sont nullement limitatifs. On pourra notamment imaginer des variantes de l'invention ne comprenant qu'une sélection de caractéristiques décrites par la suite isolées des autres caractéristiques décrites, si cette sélection de caractéristiques est suffisante pour conférer un avantage technique ou pour différencier l'invention par rapport à l'état de la technique antérieure. Cette sélection comprend au moins une caractéristique de préférence fonctionnelle sans détails structurels, ou avec seulement une partie des détails structurels si c'est cette partie qui est uniquement suffisante pour conférer un avantage technique ou pour différencier l'invention par rapport à l'état de la technique antérieure.

En particulier toutes les variantes et tous les modes de réalisation décrits sont combinables entre eux si rien ne s'oppose à cette combinaison sur le plan technique.

Sur les figures et dans la suite de la description, les éléments communs à plusieurs figures conservent la même référence.

### Description détaillée

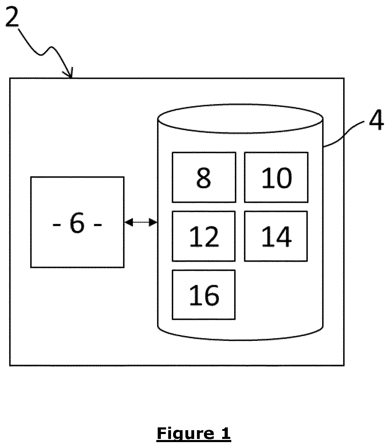

Un dispositif de calcul 2 selon l'invention est illustré par la figure 1.

Le dispositif de calcul 2 est destiné à générer au moins une image synthétique représentative d'une situation cible.

Par exemple, la situation cible est une situation rare pour laquelle peu d'images acquises sont disponibles (telle qu'un incendie dans un aéroport).

Comme illustré par la figure 1, le dispositif de calcul 2 comprend une mémoire 4 et une unité de traitement 6 reliées entre elles.

### Mémoire 4

La mémoire 4 est configurée pour stocker un moteur 3D 8, un modèle de contrôle 10, un modèle génératif 12 et un jeu de données 14.

De préférence, la mémoire 4 est, en outre, configurée pour stocker un modèle de vision par ordinateur 16 (appelé « modèle de vision » par la suite).

De façon classique, le moteur 3D 8 est un composant logiciel configuré pour générer, au cours d'une opération dite « rendu », des images d'une scène de référence modélisée dans le moteur 3D 8. En particulier, la scène de référence est représentative de la situation cible mentionnée précédemment.

Le moteur 3D 8 est, en outre, configuré pour produire des métadonnées relatives à la scène de référence. En particulier, de telles métadonnées sont représentatives d'une apparence de tout ou partie de la scène de référence modélisée. Par exemple, de telles métadonnées sont représentatives de l'aspect visuel du résultat d'un rendu 3D de la scène de référence (un tel rendu 3D comprenant, notamment, une projection de la scène sur une caméra virtuelle prédéterminée).

De telles métadonnées comprennent, par exemple, des masques de segmentation sémantique des objets présents dans la scène de référence, des boîtes englobantes, des cartes de profondeurs, des données de pose d'éléments (notamment articulés) présents dans la scène de référence, des classes des objets présents dans la scène de référence, ou encore des classes.

En particulier, le moteur 3D 8 est configuré de sorte qu'au moins une partie des métadonnées produites présente une nature dépendant du modèle de vision 16, pour lequel la mise en oeuvre d'un apprentissage est souhaitée. Par exemple, le moteur 3D 8 est configuré pour que les métadonnées produites comprennent des masques de segmentation si le modèle de vision 16 est un modèle de segmentation, des classes si le modèle de vision 16 est un modèle de classification, des boîtes englobantes si le modèle de vision 16 est un modèle de détection, etc.

Le modèle de contrôle 10 est un modèle d'intelligence artificielle couplé au modèle génératif 12, et configuré pour réaliser un contrôle du modèle génératif 12 (c'est-à-dire pour conditionner un comportement du modèle génératif 12) en fonction de données reçues en entrée dudit modèle de contrôle 10, en particulier en fonction des métadonnées produites par le moteur 3D 8.

Le modèle de contrôle 10 a été préalablement configuré pour réaliser un tel contrôle. En particulier, le modèle de contrôle 10 a été configuré pour traiter au moins un type prédéterminé de données d'entrée, notamment l'une au moins des métadonnées produites par le moteur 3D 8.

Par exemple, le modèle de contrôle 10 est un réseau de neurones préalablement entraîné à cet effet.

De façon schématique, le modèle de contrôle 10 est configuré pour transcrire les données appliquées à son entrée dans un espace latent compatible avec le modèle génératif 12, de façon à ce que lesdites données puissent, directement ou indirectement, être traitées par le modèle génératif 12 (par exemple, par au moins une couche du modèle génératif 12).

Par exemple, le modèle de contrôle 10 est le modèle ControlNet, décrit par Lvmin Zhang et al. dans la prépublication digitale « Adding Conditional Control to Text-to-Image Diffusion Models », référencée arXiv:2302.05543. Un tel modèle est, en particulier, adapté pour contrôler un modèle génératif dit « de diffusion ».

Selon un autre exemple, le modèle de contrôle 10 est le modèle T2I-Adapter, décrit par Chong Mou et al. dans la prépublication digitale « T2I-Adapter: Learning Adapters to Dig out More Controllable Ability for Text-to-Image Diffusion Models », référencée arXiv:2302.08453. Un tel modèle est également adapté pour contrôler un modèle de diffusion.

La façon dont le modèle de contrôle coopère avec le modèle génératif 12 sera décrite de façon plus précise par la suite.

Le modèle génératif 12 est un modèle d'intelligence artificielle configuré pour calculer (c'est-à-dire générer) au moins une image synthétique à partir de données descriptives représentatives d'une situation prédéterminée, en particulier de la situation cible.

En outre, le modèle génératif 12 est configuré pour calculer chaque image synthétique en fonction d'une sortie du modèle de contrôle 10. En d'autres termes, une exécution du modèle génératif 12 est contrainte par la sortie du modèle de contrôle 10.

Le modèle génératif 12 a été préalablement configuré pour réaliser un tel calcul d'images synthétiques. Par exemple, le modèle de contrôle 10 est un réseau de neurones préalablement entraîné à cet effet.

En particulier, le modèle génératif 12 est un modèle de diffusion, et plus particulièrement un modèle dit « *text-to-image »* en anglais (ou texte vers image en français), configuré pour calculer chaque image synthétique à partir de données textuelles descriptives de la situation prédéterminée (notamment de la situation cible mentionnée précédemment).

Par exemple, le modèle génératif 12 est le modèle Stable Diffusion, décrit par Robin Rombach et al. dans la prépublication digitale « High-Resolution Image Synthesis with Latent Diffusion Models », référencée arXiv:2112.10752.

Dans ce cas, le modèle ControlNet, mentionné précédemment comme étant un exemple de modèle de contrôle, a été configuré en réalisant d'abord une copie des poids de l'encodeur du modèle Stable Diffusion, puis en entraînant ladite copie à prendre en entrée une condition (par exemple, un masque de segmentation), différente des entrées habituelles du modèle Stable Diffusion.

Le résultat d'un tel entraînement est connecté au reste du modèle ControlNet par « zero convolution », c'est-à-dire une convolution 1x1 initialisée à 0 (pour éviter de l'injection de bruit au démarrage de l'entraînement) et qui est apprise au cours de l'entraînement. En outre, les sorties de la copie de l'encodeur sont connectées par d'autres « zero convolutions » au modèle Stable Diffusion, qui est, lui, complètement figé.

Dans ce cas, ladite condition, transformée par le modèle de contrôle 10, et représentée dans l'espace latent, est simplement ajoutée à l'entrée du modèle génératif 12, également représentée dans son espace latent.

Similairement, dans le cas où le modèle génératif 12 est Stable Diffusion, le modèle de contrôle T2I-adapter est configuré pour mettre en oeuvre des extracteurs de caractéristiques (dits « *features extractors »* en anglais), entraînables, pour chaque condition externe, et dont les sorties sont ajoutées aux sorties des quatre étages de l'encodeur du modèle Stable Diffusion.

Le jeu de données 14 est apte à stocker au moins une partie des images synthétiques calculées par le modèle génératif 12.

De préférence, le jeu de données 14 est apte à stocker chaque image synthétique en association avec au moins une métadonnée correspondante. Une telle association sera décrite ultérieurement.

### Unité de traitement 6

L'unité de traitement 6 est configurée pour calculer au moins une image synthétique.

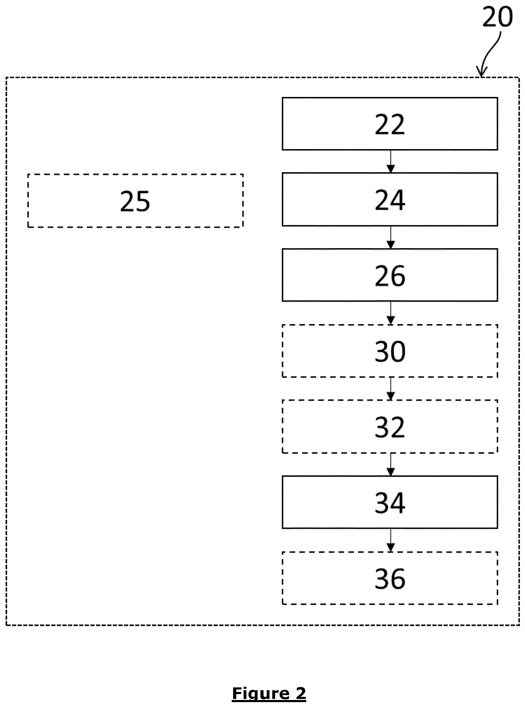

Plus précisément, pour calculer chaque image synthétique, l'unité de traitement 6 est configurée pour mettre en oeuvre un procédé 20 de génération de données (figure 2).

Comme illustré par la figure 2, le procédé 20 de génération de données comprend une étape 22 de production de données d'initialisation (dite « étape de production »), une étape de contrôle 24, une étape de calcul 26 et une étape de stockage 34.

De préférence, le procédé 20 de génération de données comprend une étape optionnelle de réglage 25, antérieure à l'étape de calcul 26.

De préférence, le procédé 20 de génération de données comprend également une étape optionnelle d'évaluation 30, comprise entre l'étape de calcul 26 et l'étape de stockage 34.

De préférence encore, le procédé 20 de génération de données comprend également une étape optionnelle d'annotation 32, comprise entre l'étape de calcul 26 et l'étape de stockage 34.

Avantageusement, le procédé 20 de génération de données comprend, en outre, une étape optionnelle d'entraînement 36, postérieure à l'étape de stockage 34.

### Etape de production 22

L'unité de traitement 6 est configurée pour, au cours de l'étape de production 22, mettre en oeuvre le moteur 3D 8 afin de produire les métadonnées relatives à la scène de référence générée (c'est-à-dire modélisée) au moyen dudit moteur 3D.

Comme indiqué précédemment, la scène de référence est représentative de la situation cible prédéterminée.

Par exemple, la scène de référence a été préalablement générée par un utilisateur.

Comme cela ressortira de la description qui va suivre, une telle étape 22 a pour but de produire des données d'initialisation, sur la base desquelles les images synthétiques seront calculées.

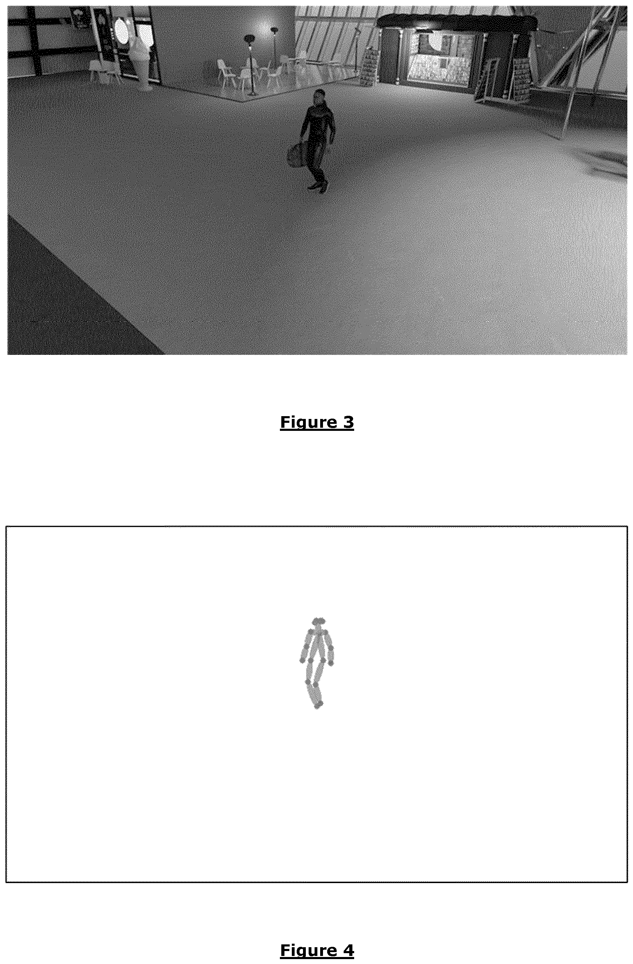

Un premier exemple de scène de référence modélisée dans un moteur 3D est illustré par la figure 3. Comme cela apparaît sur la figure, la scène de référence est représentative d'un personnage humain présent au premier plan, dans un environnement intérieur s'apparentant à un hall de gare ou d'aéroport. Le personnage se tient debout, un sac à la main, les bras le long du corps, dans une posture suggérant la marche. À l'arrière-plan, un kiosque à journaux, une zone dotée de tables et de chaises, ainsi que des distributeurs automatiques sont visibles.

En outre, la figure 4 illustre une métadonnée correspondante, produite par le moteur 3D 8 sur la base de la scène de référence de la figure 3. Plus précisément, une telle métadonnée est une image bidimensionnelle comprenant des segments agencés de façon à former un squelette adoptant la pose du personnage de la figure 3.

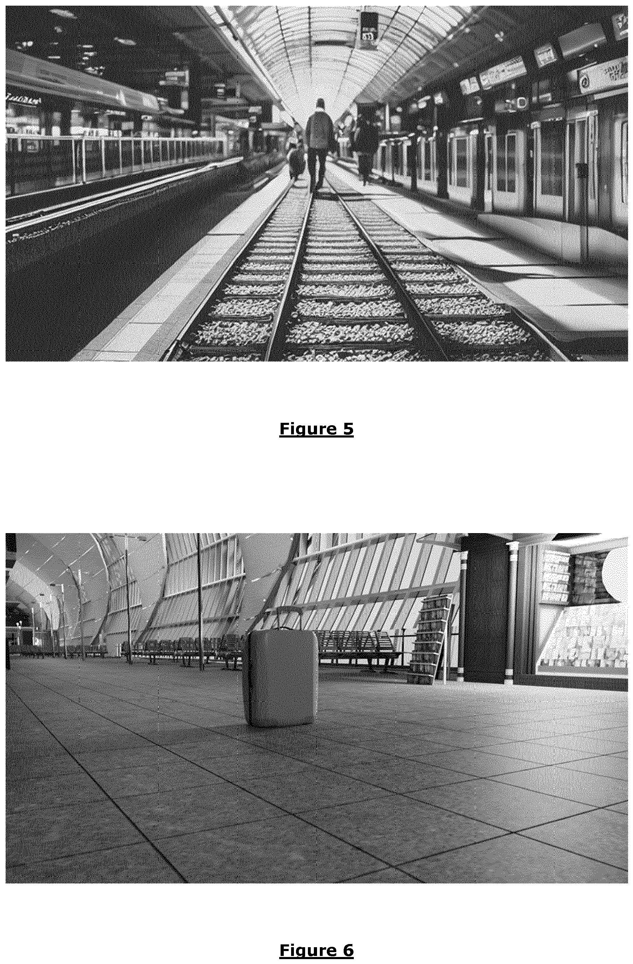

Un deuxième exemple de scène de référence modélisée dans un moteur 3D est illustré par la figure 6. Comme cela apparaît sur cette figure, la scène de référence est représentative d'une valise dont la poignée extensible est semi-déployée. La valise est posée par terre, en position verticale, et se trouve au premier plan, dans un environnement intérieur s'apparentant à un hall d'aéroport. À l'arrière-plan, un kiosque à journaux, un présentoir et des rangées de sièges sont visibles, ainsi qu'une verrière formant les parois de l'aéroport.

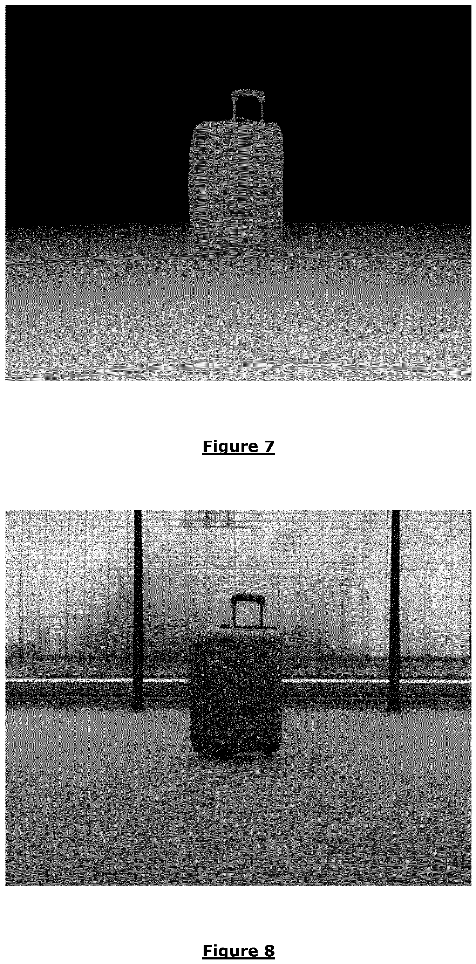

En outre, la figure 7 illustre une métadonnée correspondante, produite par le moteur 3D 8 sur la base de la scène de référence de la figure 6. Plus précisément, une telle métadonnée est une image bidimensionnelle comprenant un masque de segmentation représentatif des contours de la valise dans l'image de la figure 6.

### Etape de contrôle 24

En outre, l'unité de traitement 6 est configurée pour exécuter, au cours de l'étape de contrôle 24, le modèle de contrôle 10. En particulier, l'unité de traitement 6 est configurée pour fournir, en entrée du modèle de contrôle 10, au moins une partie des métadonnées produites par le moteur 3D 8, et ce afin d'obtenir une sortie correspondante du modèle de contrôle 10.

Par exemple, en référence aux exemples des figures 3 et 4, l'unité de traitement 6 est configurée pour exécuter le modèle de contrôle 10 sur la base de l'image bidimensionnelle de la figure 4, afin de produire une sortie correspondante.

### Etape de réglage 25

De préférence, l'unité de traitement 6 est configurée pour, au cours de l'étape de réglage 25, modifier le modèle génératif 12.

De préférence, pour réaliser une telle modification, l'unité de traitement 6 est configurée pour entraîner le modèle génératif 12 sur la base de données additionnelles au moins en partie distinctes des données d'entraînement initiales utilisées pour un entraînement initial du modèle génératif 12. En particulier, les données additionnelles sont choisies en fonction d'une application finale désirée. Notamment, les données additionnelles correspondent à la situation cible.

Par exemple, les données additionnelles comprennent des images représentatives d'objets et/ou de personnes absentes des données d'entraînement initiales du modèle génératif 12. Ceci est, notamment, préférable dans le cas où la génération d'images comprenant des objets spécifiques est recherchée.

Dans ce cas, l'unité de traitement 6 est, par exemple, configurée pour mettre en oeuvre une approche telle que DreamBooth ou Textual Inversion, classiquement connues, pour réaliser la modification du modèle génératif 12.

Selon un autre exemple, les données additionnelles sont représentatives de caractéristiques visuelles (par exemple, une texture, un style, etc.) désirées dans les images générées par le modèle génératif 12. Dans ce cas, lesdites caractéristiques visuelles sont, de préférence, capturées avec un degré contrôlable, et le modèle génératif 12 est réglé de sorte que lesdites caractéristiques visuelles soient retranscrite dans les images générées par le modèle génératif.

Une telle étape de réglage est avantageuse, dans la mesure où elle confère, au modèle génératif 12, la faculté de générer des images appartenant à un domaine visuel (caractérisé, par exemple, par un environnement particulier ou la luminosité d'une caméra client) ou comprenant des objets spécifiques plus précis (tels que des personnes ou objets uniques dans des situations particulières).

### Etape de calcul 26

L'unité de traitement 6 est, en outre, configurée pour exécuter, durant l'étape de calcul 26, le modèle génératif 12. En particulier, l'unité de traitement 6 est configurée de façon à fournir, en entrée du modèle génératif 12, la sortie du modèle de contrôle 10 et des données descriptives, fournies par un utilisateur et relatives à la situation cible, pour calculer au moins une image synthétique représentative de ladite situation cible.

Les données descriptives sont, en particulier, des données textuelles comprenant une description de la situation cible pour laquelle la génération d'au moins une image synthétique, représentative de ladite situation cible, est souhaitée.

Par exemple, en référence aux exemples des figures 3 et 4, les données descriptives de la situation cible sont « humain marchant dans une gare et portant un sac à dos ». La figure 5 illustre un exemple d'image synthétique obtenue en fournissant de telles entrées au modèle génératif 12. Comme cela apparaît sur cette figure 5, le personnage présente la même pose que celle définie par la figure 4.

Selon un autre exemple, en référence aux figures 6 et 7, les données descriptives de la situation cible sont « photo réaliste d'une valise dans une station ». La figure 8 illustre un exemple d'image synthétique obtenue en fournissant de telles entrées au modèle génératif 12. Comme cela apparaît sur cette figure 8, la valise présente la même forme que celle définie par le masque de segmentation de la figure 7. En particulier, la poignée extensible de la valise de l'image synthétique est déployée de la même façon que la poignée de la valise de la figure 6.

Toutefois, les données descriptives ne sont pas limitées à des données textuelles, et sont, par exemple, susceptibles d'être des images, fournies en plus ou en remplacement des données textuelles.

### Etape d'évaluation 30

Avantageusement, pour chaque image synthétique calculée, le dispositif de traitement 6 est, en outre, configuré pour déterminer, durant l'étape d'évaluation 30, un score correspondant.

De préférence, pour chaque image synthétique calculée, le score correspondant est représentatif d'une qualité de ladite image synthétique.

Dans ce cas, le score déterminé est, par exemple, un score FID (de l'anglais « *Fréchet Inception Distance* »), un score CLER (de l'anglais *« Content-Style Loss for Exemplar Rendering* ») ou encore un score CLIP (de l'anglais « *Contrastive Language-Image Pretraining* »).

Alternativement, ou de façon complémentaire, pour chaque image synthétique, le score correspondant est représentatif d'une similarité de ladite image synthétique avec au moins une image prédéterminée d'un ensemble prédéterminé d'images de référence.

Par exemple, dans le cas de la génération d'images représentatives d'un incendie dans un aéroport donné, les images de référence sont susceptibles d'être des images de l'aéroport lui-même.

Alternativement, ou de façon complémentaire, le score associé aux images synthétiques est représentatif d'une distance entre une distribution des images synthétiques et une distribution d'un ensemble prédéterminé d'images de référence.

Dans ce cas, les images synthétiques d'une part, et les images de référence, d'autres part, sont appliquées en entrée d'un modèle de fondation prédéterminé (par exemple, un réseau VGG, ResNet, CLIP, etc.), préalablement entraîné sur la base d'une grande variété sémantique et d'images, et dont chaque couche encode des informations différentes. Par exemple, sur un réseau ResNet, les informations de style et textures sont principalement encodées dans les statistiques des premières couches, tandis que l'information sémantique est principalement encodée dans les dernières couches.

Puis, le score déterminé par l'application, par exemple, d'une divergence de Kullback-Leibler, d'un score MMD (de l'anglais « *Maximum Mean Discrepancy »,* ou divergence maximale moyenne), ou encore d'une distance Wasserstein aux sorties de couches prédéterminées (telles que les couches dites « *conv layer* » ou « *maxpool* ») obtenues respectivement pour les images synthétiques et pour les images de référence.

### Etape d'annotation 32

L'unité de traitement 6 est, en outre, configurée pour, durant l'étape d'annotation 32, associer au moins une partie des métadonnées produites par le modèle 3D 8 à chaque image synthétique.

En particulier, l'unité de traitement 6 est configurée pour associer, à chaque image synthétique, au moins une partie des métadonnées fournies en entrée du modèle de contrôle 10.

Une telle caractéristique est avantageuse, dans la mesure où elle contribue à la constitution de données susceptibles d'être utilisées dans le cadre de l'apprentissage supervisé d'un modèle d'intelligence artificielle, en particulier du modèle de vision 16.

Il pourra être noté que l'ordre des étapes d'annotation 32 et d'évaluation 30 peut être inversé lors de l'exécution du procédé 20 de génération de données.

### Etape de stockage 34

L'unité de traitement 6 est, en outre, configurée pour stocker, dans le jeu de données 14, durant l'étape de stockage 34, au moins une image synthétique calculée.

Avantageusement, dans le cas où l'étape d'évaluation 30 a été mise en oeuvre, le dispositif de traitement 6 est, en outre, configuré pour stocker, dans le jeu de données 14, uniquement les images synthétiques présentant un score appartenant à une plage prédéterminée. Une telle caractéristique est avantageuse, dans la mesure où elle confère au jeu de données 14 une qualité suffisante pour son utilisation dans le cadre de l'apprentissage d'un modèle d'intelligence artificielle, notamment le modèle de vision 16.

Avantageusement, dans le cas où l'étape d'annotation 32 a été mise en oeuvre, le dispositif de traitement 6 est, en outre, configuré pour stocker, dans le jeu de données 14, chaque image synthétique en association avec les métadonnées correspondantes. Une telle caractéristique est avantageuse, dans la mesure où elle autorise une utilisation immédiate du jeu de données 14 dans le cadre de l'apprentissage supervisé d'un modèle d'intelligence artificielle, en particulier du modèle de vision 16.

### Etape d'entraînement 36

De préférence, l'unité de traitement 6 est configurée pour réaliser, au cours de l'étape d'entraînement 36, un entraînement du modèle de vision 16 sur la base du jeu de données 14 construit à partir des images de synthèse calculées. Dans ce cas, l'unité de traitement 6 est configurée pour fournir, au modèle de vision 16, chaque image synthétique en guise d'entrée, les métadonnées associées formant une sortie attendue du modèle de vision 16 pour ladite entrée.

Une telle caractéristique est avantageuse, dans la mesure où elle contribue à optimiser un modèle de vision par ordinateur pour le traitement d'images représentatives des situations cibles prédéterminées, notamment de situations cibles rares.

### Fonctionnement

Le fonctionnement du dispositif de calcul 2 va maintenant être décrit en référence aux figures 1 et 2.

Au cours d'une étape initiale (non représentée), le moteur 3D 8, le modèle de contrôle 10, le modèle génératif 12 et le jeu de données 14 sont stockés dans la mémoire 4. De préférence, au cours de l'étape initiale, le modèle de vision 16 est également stocké dans la mémoire 4.

Puis, au cours de l'étape de production 22, l'unité de traitement 6 met en oeuvre le moteur 3D 8 afin de produire les métadonnées relatives à une scène de référence modélisée au moyen dudit moteur 3D. Une telle scène de référence a, par exemple, été préalablement générée par un utilisateur.

Comme indiqué précédemment, la scène de référence est représentative d'une situation cible prédéterminée.

Puis, au cours de l'étape de contrôle 24, l'unité de traitement 6 met en oeuvre le modèle de contrôle 10, sur la base d'au moins une partie des métadonnées produites par le moteur 3D 8. Il en résulte une sortie correspondante du modèle de contrôle 10.

Puis, au cours de calcul 26, l'unité de traitement 6 met en oeuvre le modèle génératif 12, sur la base de la sortie du modèle de contrôle 10 et de données descriptives, fournies par l'utilisateur et relatives à la situation cible. Il en résulte au moins une image synthétique représentative de ladite situation cible.

De préférence, l'unité de traitement 6 a préalablement modifié le modèle génératif 12, au cours de l'étape optionnelle de réglage 25, pour lui conférer un comportement en adéquation avec une application finale désirée.

Puis, au cours de l'étape optionnelle d'évaluation 30, le dispositif de traitement 6 détermine, pour chaque image synthétique calculée, un score correspondant.

Puis, durant l'étape optionnelle d'annotation 32, l'unité de traitement 6 associe au moins une partie des métadonnées produites par le modèle 3D 8 à chaque image synthétique.

Puis, durant l'étape de stockage 34, l'unité de traitement 6 stocke, dans le jeu de données 14, au moins une image synthétique calculée.

Dans le cas où l'étape d'évaluation 30 a été mise en oeuvre, le dispositif de traitement 6 stocke avantageusement, dans le jeu de données 14, uniquement les images synthétiques présentant un score appartenant à une plage prédéterminée.

En outre, dans le cas où l'étape d'annotation 32 a été mise en oeuvre, le dispositif de traitement 6 stocke avantageusement, dans le jeu de données 14, chaque image synthétique en association avec les métadonnées corresponda ntes.

Puis, au cours de l'étape optionnelle d'entraînement 36, l'unité de traitement 6 réalise un entraînement du modèle de vision 16 sur la base du jeu de données 14 construit à partir des images de synthèse calculées. Il en résulte un modèle de vision 16 entraîné, adapté, par exemple, à la détection de la situation cible.

Bien entendu l'invention n'est pas limitée aux exemples qui viennent d'être décrits.

## Revendications

1. Procédé de génération de données, le procédé étant mis en oeuvre par ordinateur et comprenant les étapes :
- mise en oeuvre (22) d'un moteur 3D (8) pour produire des métadonnées relatives à une scène de référence générée au moyen dudit moteur 3D, la scène de référence étant représentative d'une situation cible prédéterminée ;
- fourniture (24), en entrée d'un modèle de contrôle (10) couplé à un modèle génératif (12), d'au moins une partie des métadonnées produites par le moteur 3D ;
- calcul (26), au moyen du modèle génératif (12), d'au moins une image synthétique représentative de la situation cible, à partir d'une sortie du modèle de contrôle et de données descriptives relatives à la situation cible ; et
- stockage (34), dans un jeu de données (14), d'au moins une image synthétique calculée.

2. Procédé selon la revendication 1, comprenant, en outre, une étape d'évaluation (30) comprenant une détermination, pour chaque image synthétique calculée, d'un score correspondant, chaque image synthétique stockée dans le jeu de données présentant un score appartenant à une plage prédéterminée.

3. Procédé selon la revendication 2, dans lequel, pour chaque image synthétique, le score correspondant est représentatif d'une qualité de ladite image synthétique et/ou d'une similarité de ladite image synthétique avec au moins une image prédéterminée.

4. Procédé selon l'une quelconque des revendications 1 à 3, comprenant, en outre, une association (32), à chaque image synthétique, d'au moins une partie des métadonnées produites à l'issue de la mise en oeuvre du moteur 3D, de préférence d'au moins une partie des métadonnées fournies en entrée du modèle de contrôle.

5. Procédé selon la revendication 4, comprenant, en outre, un entraînement (36) d'un modèle (16) de vision par ordinateur sur la base du jeu de données (14), chaque image synthétique formant une entrée du modèle (16) de vision par ordinateur, les métadonnées associées formant une sortie attendue du modèle (16) de vision par ordinateur pour ladite entrée.

6. Procédé selon l'une quelconque des revendications 1 à 5, comprenant, en outre, une étape de réglage (25), antérieure à l'étape de calcul (26), comportant un entraînement du modèle génératif (12) sur la base de données additionnelles prédéterminées correspondant à la situation cible, pour modifier le modèle génératif (12).

7. Programme d'ordinateur comprenant des instructions exécutables qui, lorsqu'elles sont exécutées par ordinateur, mettent en en oeuvre les étapes du procédé selon l'une quelconque des revendications 1 à 6.

8. Dispositif de calcul (2) pour la génération de données, le dispositif de calcul (2) comprenant une unité de traitement (6) configurée pour :
- mettre en oeuvre (22) un moteur 3D (8) pour produire des métadonnées relatives à une scène de référence générée au moyen dudit moteur 3D, la scène de référence étant représentative d'une situation cible prédéterminée ;
- fournir (24), en entrée d'un modèle de contrôle (10) couplé à un modèle génératif (12), au moins une partie des métadonnées produites par le moteur 3D ;
- calculer (26), au moyen du modèle génératif (12), au moins une image synthétique représentative de la situation cible, à partir d'une sortie du modèle de contrôle et de données descriptives relatives à la situation cible ; et
- stocker (34), dans un jeu de données (14), au moins une image synthétique calculée.
